# EUROPEAN PATENT APPLICATION

(11) **EP 2 754 642 A1**
(43) Date of publication of application: **16.07.2014**
(21) Application number: 12830716.2
(22) Date of filing: 05.09.2012
(51) Int. Cl.: C02F 1/28, B01D 63/00, B01D 63/02, C02F 1/44

(54) **WATER PURIFICATION CARTRIDGE AND WATER PURIFICATION APPARATUS**

(30) Priority: 06.09.2011 JP 2011193941
(71) Applicant: Mitsubishi Rayon Co., Ltd., Tokyo 100-8253 (JP)
(72) Inventor: TAKEDA, Hatsumi, Toyohashi-shi Aichi 440-8601 (JP)
(74) Representative: HOFFMANN EITLE
(86) International application number: PCT/JP2012/072636
(87) International publication number: WO 2013/035748

(57) **Abstract**

The objective of the present invention is to provide a water purification cartridge with excellent water permeability and processing capability. The present invention relates to a water purification cartridge positioned between a raw water reservoir and a purified water reservoir of a water purifier and having a container to accommodate an adsorbent and a hollow-fiber membrane for filtering raw water. Such a water purification cartridge includes an adsorber section in which the adsorbent is positioned and which has a water collector section through which the water filtered by the adsorbent flows; a hollow-fiber membrane section in which the hollow-fiber membrane is positioned and which is located on the downstream side of the adsorber section and the water collector section; and an air outlet positioned on the upper side of the container and connected to the space in the water collector section.

## Description

### Field of the Invention

The present invention relates to a water purification cartridge and a water purifier using such a water purification cartridge.

### Description of Background Art

As a water purifier with an installed water purification cartridge, a so-called pot-type purifier is known. Such a pot-type water purifier is structured to have a water purification cartridge interposed between an upper-side raw water reservoir and a lower-side purified water reservoir. By virtue of its own weight, raw water stored in the raw water reservoir passes through the water purification cartridge to be purified in the water purification cartridge, then flows into the purified water reservoir. As an example of a purification cartridge installed in a pot-type water purifier, the one described in patent publication 1 is listed.

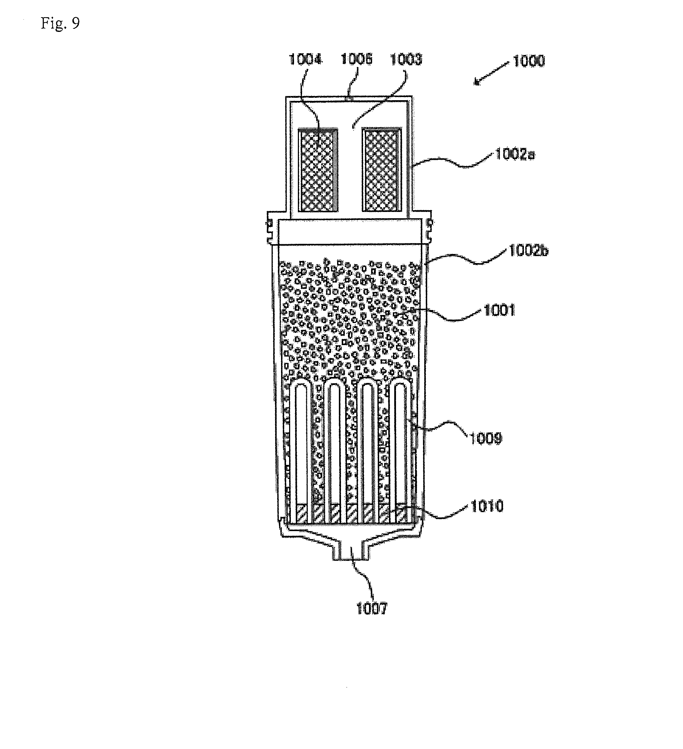

FIG. 9 is a view showing an example of a conventional water purification cartridge. In water purification cartridge **1000,** adsorbent **1001** and hollow-fiber membrane **1009** are provided in the container as filtration material. The container is structured mainly with cylindrical casing **1002b,** which has an opening on the upper side and accommodates filtration material, and cylindrical cover **1002a,** which closes the upper opening of cylindrical casing **1002b.** Cylindrical cover **1002a** forms space **1003** which works as an air-collection portion in the container, and air outlet **1006** is provided in the upper center of cylindrical cover **1002a** to vent air bubbles generated in the water purification cartridge. In addition, raw water entry port **1004** is provided on a side of cylindrical cover **1002a.** Hollow-fiber membrane **1009** is fixed in the container by potting resin **1010.** Below potting resin **1010,** purified water exit port **1007** is provided for purified water obtained after the raw water has passed through filtration material.

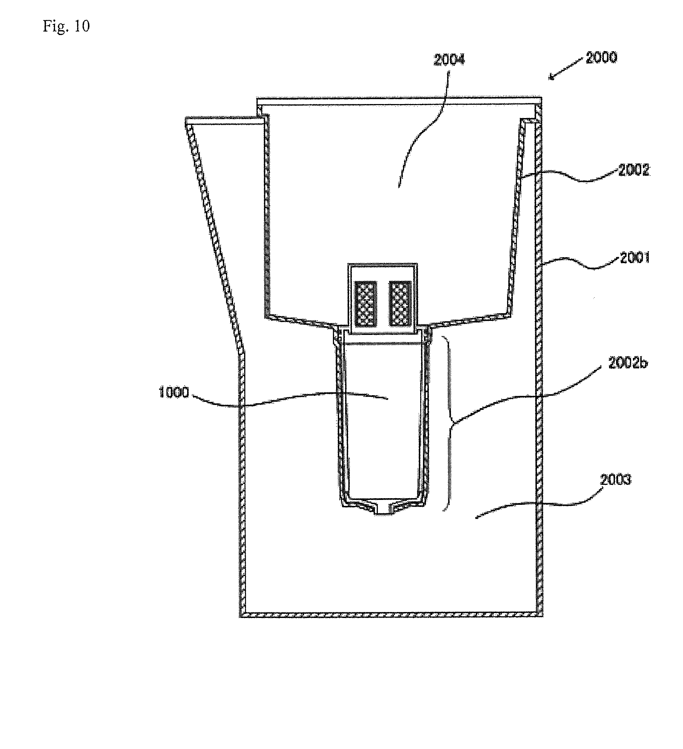

FIG. 10 is a view schematically showing pot-type water purifier **2000** in which water purification cartridge **1000** shown in FIG. 9 is installed. Water purifier **2000** has inner container **2002** that structures raw water reservoir **2004** and outer container **2001** that structures purified water reservoir **2003.** Cartridge accommodation portion **2002b** is provided in inner container **2002,** and water purification cartridge **1000** is positioned in cartridge accommodation portion **2002b.** Raw water stored in raw water reservoir **2004** flows into the water purification cartridge from the raw water entry port, and by virtue of its own weight flows through the water purification section to be purified where filtration material is arranged. The obtained purified water flows from the purified water drainage port toward purified water reservoir **2003.**

Such a water purification cartridge needs to have a structure to vent air generated inside so that the permeability of the water is maintained. In aforementioned water purification cartridge **1000,** air outlet **1006** is provided in the upper center of cylindrical cover **1002a**.

Also, a water purification cartridge proposed in patent publication 2 has an adsorber layer and a hollow-fiber membrane module below the adsorber layer, and an air ventilation pipe is provided to vent the air generated in the hollow-fiber membrane module upward to the outside.

Patent publication 3 proposes a water purification cartridge having an air ventilation pipe that penetrates through the upper and lower bottom portions, and the upper portion is positioned above the liquid inflow portion.

### PRIOR ART PUBLICATION

### PATENT PUBLICATION

patent publication 1: Japanese Publication of PCT Application 2003-514647
patent publication 2: Japanese Published Unexamined Patent Application 2004-230358
patent publication 3: Japanese Published Unexamined Patent Application 2005-342684

### SUMMARY OF THE INVENTION

### PROBLEMS TO BE SOLVED BY THE INVENTION

A water purification cartridge described in patent publication 2 or 3 is capable of efficiently venting the air generated inside. However, if a water purification cartridge has an air ventilation pipe or an air exhaust tube, problems may arise such as a taller size and an increase in manufacturing costs due to its complex structure.

In addition, the filtration duration of a water purification cartridge is preferred to be shorter, and the processing speed is also required to be improved.

In response to the above, the objective of the present invention is to provide a water purification cartridge with excellent water permeability and processing capability.

### SOLUTIONS TO THE PROBLEMS

Accordingly, the present invention relates to a water purification cartridge positioned between a raw water reservoir and a purified water reservoir of a water purifier and having a container to accommodate an adsorbent and a hollow-fiber membrane for filtering raw water. Such a water purification cartridge includes an adsorber section in which the adsorbent is positioned and which has a water collector section through which the water filtered by the adsorbent flows; a hollow-fiber membrane section in which the hollow-fiber membrane is positioned and which is located on the downstream side of the adsorber section and the water collector section; and an air outlet positioned on the upper side of the container and connected to the space in the water collector section.

According to another embodiment of the present invention, a water purifier is provided with the water purification cartridge installed therein.

### EFFECTS OF THE INVENTION

By structuring as above, a water purification cartridge with excellent water permeability and processing capability is provided according to the present invention.

### BRIEF DESCRIPTION OF THE DRAWINGS

FIG. 1: a cross-sectional view schematically illustrating a structural example of a water purification cartridge according to an embodiment of the present invention;
FIG. 2: upper plan views schematically illustrating structural examples of a water purification cartridge according to the embodiment;
FIG. 3: a cross-sectional view schematically illustrating a structural example of a water purification cartridge according to the embodiment;
FIG. 4: cross-sectional views schematically illustrating structural examples of a water purification cartridge according to the embodiment;
FIG. 5: upper plan views schematically illustrating structural examples of a water purification cartridge according to the embodiment;
FIG. 6: cross-sectional views schematically illustrating structural examples of a water purification cartridge according to the embodiment;
FIG. 7: a cross-sectional view schematically illustrating a structural example of a water purification cartridge according to the embodiment;
FIG. 8: a cross-sectional view schematically illustrating the structure of a water purifier in which the water purification cartridge according to an embodiment of the present invention is installed;
FIG. 9: a cross-sectional view schematically illustrating a structural example of a conventional water purification cartridge; and
FIG. 10: a cross-sectional view schematically illustrating the structure of a water purifier in which a conventional water purification cartridge is installed.

### MODE TO CARRY OUT THE INVENTION

The present invention relates to a water purification cartridge which is positioned between a raw water reservoir and a purified water reservoir of a water purifier and is provided with a container to accommodate an adsorbent and a hollow-fiber membrane for filtering raw water. Such a water purification cartridge has an adsorbent section in which the adsorbent is positioned, and a water collector section is formed through which the water filtered by the adsorbent flows; a hollow-fiber membrane section in which the hollow-fiber membrane is positioned and which is located below the adsorber section and the water collector section; and an air outlet which is positioned on the upper side of the container and is connected to the space in the water collector section to vent out the air. By providing a water collector section inside the adsorber section, the area through which the water filtered by the adsorbent flows out is set greater on the side surface of the adsorber section. In addition, the air generated in the hollow-fiber membrane section passes through at least the water collector section and is vented to the outside from the air outlet. Accordingly, excellent water permeability is achieved. As a result, by employing the structure according to the present embodiment, a water purification cartridge with excellent water permeability and processing capability is provided.

The following is a detailed description of an embodiment of the present invention related to a water purification cartridge with reference to the accompanying drawings. However, the present invention is not limited to the embodiment below.

### (First Embodiment)

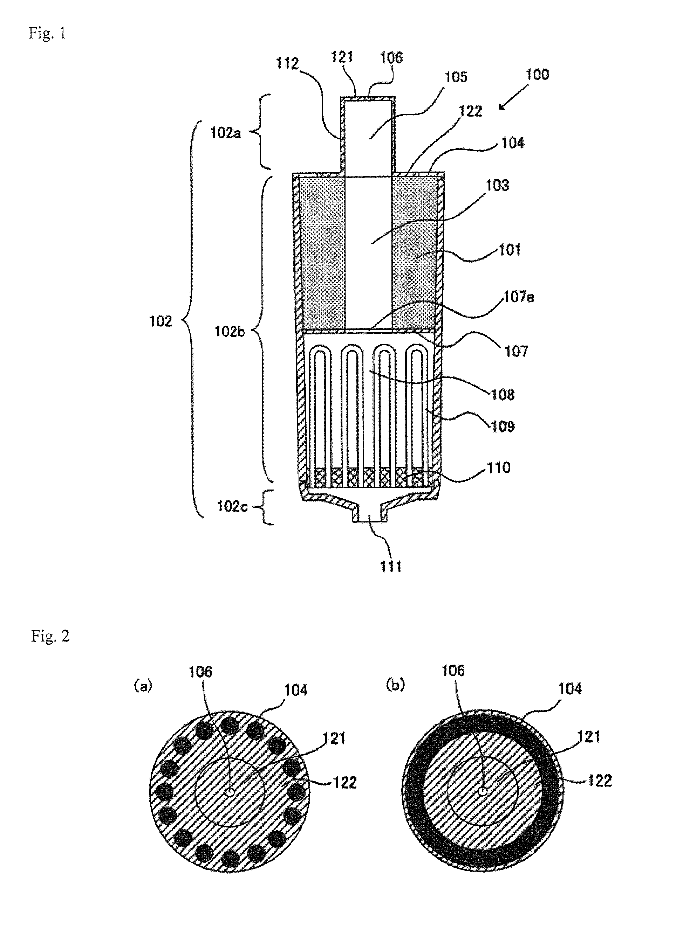

FIG. 1 is a cross-sectional view schematically illustrating the structure of a water purification cartridge according to an embodiment of the present invention. In the present application, upper and lower directions of a water purification cartridge are determined based on the way the cartridge is installed in a water purifier.

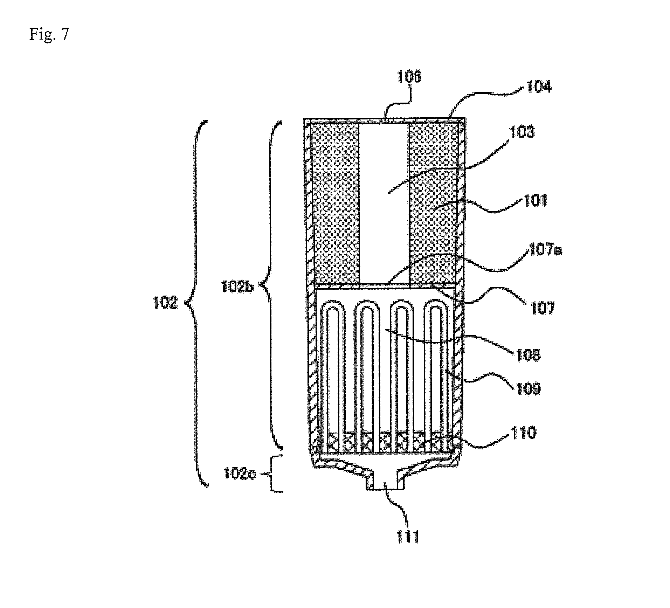

As shown in FIG. 1, water purification cartridge **100** has container **102** which accommodates adsorber section **101** where an adsorbent is arranged and accommodates hollow-fiber membrane section **108** where hollow-fiber membrane **109** is arranged. Adsorber section **101** is positioned above hollow-fiber membrane section **108.** Water collector section **103** is formed to vertically pass through adsorber section **101,** and the lower end of water collector section **103** is connected to hollow-fiber membrane section **108.** In other words, adsorber section **101** is positioned on the upper side of the container, hollow-fiber membrane section **108** is positioned on the lower side of the container, and water collector section **103** is formed to vertically pass through adsorber section **101.** The shape of water collector section **103** is not limited specifically, and may be cylindrical with a substantially circular cross section, a substantially elliptical cross section or a substantially polygonal cross section. A cylindrical shape with a circular cross section is preferred. Above water collector section **103,** air collector section **105** is provided to collect air generated inside. The air generated inside the container reaches air collector section **105** through water collector section **103.** However, the present invention is not limited to such a structure, and water collector section 103 may also work as the air collector section (see FIG. 7). Water collector section **103** is formed in the horizontally central position of adsorber section **101** and vertically passes through adsorber section **101.**

Also, when the sum of the cross-sectional area of the plane perpendicular to the gravity direction in adsorber section **101** (vertical direction in FIG. 1) and the cross-sectional area of the plane perpendicular to the gravity direction in the water collector section is set as "A" as shown in FIG. 11(a), whereas the cross-sectional area of the plane perpendicular to the gravity direction in the water collector section is set as "B" as shown in FIG. 11(b), the value obtained by "B/A" is preferred to be 0.001∼0.91. If the value is smaller than 0.001, loss of pressure may increase, and if the value is greater than 0.91, a short pass of water may occur. Moreover, the value of "B/A" is preferred to be no greater than 0.64. If the value of "B/A" is no greater than 0.64, designing a compact water purification cartridge is achieved.

Container **102** is structured mainly with cylindrical casing **102b** to accommodate filtration materials, upper cover **102a** positioned at the upper end of casing **102b,** and a lower cover **102c** positioned at the lower end of casing **102b.** However, the container according to the present embodiment is not limited to such a structure. As shown in FIG. 1, a protruding portion is formed so as to provide an air collector section for upper cover **102.** However, as shown in FIG. 7, it is an option to set water collector section **103** for functioning as an air collector section as well instead of forming a protruding portion in upper cover **102.** To connect upper cover **102a** and casing **102b** as well as lower cover **102c** and casing **102b,** adhesion or welding may be employed, for example.

Upper cover **102a** has protruding portion **112** which forms air collector section **105** on water collector section **103.** In the upper portion of protruding portion **112,** air outlet **106** is provided to vent air from air collector section **105** to the outside. More specifically, air outlet **106** is provided in upper level **121** of protruding portion **112,** namely, in the upper portion of upper cover **102a.** In addition, raw water entry port **104** is formed at lower level **122** of upper cover **102a** to allow raw water from the raw water reservoir to enter the container. In other words, air outlet **106** is provided at the upper portion of protruding portion **112** that forms air collector section **105,** and raw water entry port **104** is provided along the container wall positioned between the lower end of protruding portion **112** and the side wall of the container. Raw water entry port **104** is preferred to be formed so that raw water flows directly into adsorber section **101** through raw water entry port **104.**

Hollow-fiber membrane section **108** is provided on the downstream side of adsorber section **101** and water collector section **103.** Hollow-fiber membrane **109** is fixed at the lower end of casing **102b** in the container by using potting resin **110** as shown in FIG. 1. The end portion of hollow-fiber membrane **109** is open on the surface opposite the surface where potting resin **110** is positioned in hollow-fiber membrane **109.**

Adsorber section **101** and hollow-fiber membrane section **108** are separated by divider wall **107** having opening **107a** connecting water collector section **103** and hollow-fiber membrane section **108.**

In addition, lower cover **102c** positioned at the lower end of casing **102b** has purified water exit port **111** to drain obtained purified water. Lower cover **102c** is shaped with a gentle downward slope toward purified water drainage port **111.**

Raw water in the raw water reservoir flows from raw water entry port **104** into adsorber section **103** by virtue of gravity. The water filtered in adsorber section **103** flows from the inner wall surface of adsorber section **103** into water collector section **103,** and further flows into hollow-fiber membrane section **108** from the lower end of water collector section **103.** Then, the water that flowed into hollow-fiber membrane section +**108** is further filtered by hollow-fiber membrane **109** and flows out from the end opening of the hollow-fiber membrane toward the purified water exit port. The purified water is drained from purified water exit port **111** to the purified water reservoir.

Using the structure above, the area through which the water filtered in the adsorber section flows out is formed greater on the inner side surface of the adsorber section, thus the processing capability of the water purification cartridge is enhanced. In addition, since the air generated in the hollow-fiber membrane section passes through the water collector section and air collector section to be vented efficiently to outside the container from the air outlet, the water permeability of the water purification cartridge is further enhanced. Accordingly, the water purification cartridge having the structure of the present embodiment has excellent water permeability and processing capability.

An adsorbent is provided in adsorber section **101.** As for the adsorbent, for example, fibrous adsorbents, powder adsorbents, granular adsorbents formed by shaping powder adsorbents into particles, and the like may be used. Examples of such adsorbents are inorganic adsorbents such as natural-product-based adsorbents (natural zeolite, silver zeolite, acid white clay and the like), and synthetic adsorbents (synthetic zeolite, bacterium adsorbing polymer, phosphate ore, molecular sieves, silica gel, silica-alumina gel, porous glass and the like).

Also, activated carbon is preferred as the adsorbent. Examples of activated carbon are powdered activated carbon, granular activated carbon, fibrous activated carbon, activated carbon blocks, extrusion molding activated carbon, molded activated carbon, compound-based granular activated carbon, compound-based fibrous activated carbon and the like. When granular activated carbon is used, its particle size is preferred to be in the range of 0.07∼2 mm. Using granular activated carbon with a particle size no smaller than 0.07 mm, the pressure loss is reduced. Also, by using granular activated carbon with a particle size no greater than 2 mm, designing a compact water purification cartridge is achieved.

In addition, organic adsorbents may also be used instead of inorganic adsorbents. Examples of organic adsorbents are molecule adsorbing resins, ion exchange resins, ion exchange fibers, chelate resins, chelate fibers, superabsorbent resins, oil absorbent resins, oil absorbents and the like. Among those, it is preferred to use activated carbon that is excellent in adsorbing organic compounds such as residual chlorine, mold odors, trihalomethanes, and so forth in raw water.

Furthermore, a molded adsorbent, for example, molded activated carbon, is preferred to be used in the present embodiment. Molding is conducted, for example, by extrusion and die molding. Molded activated carbon is formed by mixing granular or fibrous activated carbon with a binder. Using a molded body as an adsorbent, it is easier to form the adsorber section, and the compact structure of a water purification cartridge is obtained. In addition, the cost of forming a water purification cartridge is reduced.

Other preferred adsorbents are ion exchange fibers that are excellent for decreasing water hardness and adsorbing water-soluble metals. Examples of ion exchange fibers are strong acid types with a sulfonic acid group as an exchanger, weak acid types with a carboxylic acid group as an exchanger, strong base types with a quaternary ammonium group as an exchanger, weak base types with an amine group as an exchanger and the like.

Moreover, dechlorination agents excellent for removing residual chlorine may also be used preferably as an adsorbent. As for such a dechlorination agent, calcium sulfite is preferred because it is capable of removing chlorine for a prolonged duration.

Adsorbents may be used alone or in combination of any two or more.

The adsorber section is preferred to be positioned so that the upper end portion of the adsorber section is in contact with the upper wall of the container. In addition, the adsorber section is preferred to be in contact with the inner wall portions of the container positioned around protruding portion **112** and the upper portion of the adsorber section. Namely, as shown in FIG. 1, the adsorber section is preferred to be in contact with the wall surface of lower level **122** of upper cover **102a.** More specifically, the adsorber section is preferred to be in contact with the container wall from the lower end of protruding portion **112** which forms air collector section **105** down to the side wall of the container. By so setting, raw water is efficiently allowed to enter water collector section **103** through adsorber section **103** from raw water entry port **104** formed at the container wall positioned above the adsorber section.

Hollow-fiber membranes are not limited specifically, but examples thereof include various materials based on cellulose, polyolefin (polyethylene, polypropylene), polyvinyl alcohol, ethylene-vinyl alcohol copolymer, polyether, polymethyl methacrylate (PMMA), polysulfone, polyacrylonitrile, polytetrafluoroethylene (Teflon, registered trademark), polycarbonate, polyester, polyamide, and aromatic polyamide. Among those, polyolefin-based hollow-fiber membranes such as polyethylene and polypropylene are preferred from the viewpoints of ease of handling and processability of hollow-fiber membranes as well of ease as disposal, such as incineration.

A hollow-fiber membrane is not limited to any specific dimensions, but is preferred to have an outer diameter of 20∼2000 µm, a hole diameter of 0.01∼1 µm, a porosity of 20∼90%, and a membrane thickness of 5∼300 µm. In addition, a hollow-fiber membrane is preferred to be such that has on its surface a hydrophilic group - a so-called hydrophilic hollow-fiber membrane.

Furthermore, the membrane surface area of a hollow-fiber membrane is preferred to be 0.1∼1 m². By setting the membrane surface area of the hollow-fiber membrane at 0.1 m² or greater, permeability is enhanced. In addition, by setting the membrane surface area of the hollow-fiber membrane at 1 m² or smaller, a water purification cartridge is designed to be compact.

A raw water entry port is provided on the upper portion of a container so as to allow raw water in the raw water reservoir to enter the container. Raw water that has entered the container from the raw water entry port flows into the adsorber section. The shape of the raw water entry port is not limited specifically, and may be circular, elliptical, polygonal or irregular, for example. FIG. 2 shows examples of the shape and positioning of a raw water entry port. As shown in FIG. 2(a), multiple raw water entry ports may be provided on the upper side of the container in the vicinity of the side wall of the container. Alternatively, as shown in FIG. 2(b), a raw water entry port may be provided on the upper side of the container in the vicinity of the side wall of the container by being formed in a circular shape concentric with the circular shape of the container seen in a horizontal direction. In such an example, a raw water entry port is formed in a region, for example, from a side wall of the container to a middle point between the side wall of the container and the side surface of protruding portion 112. By positioning the raw water entry port in such a region, raw water is effectively filtered in the adsorber section.

The raw water entry port is not limited to any specific type, but may be formed using mesh material as shown in FIG. 2, because such material effectively allows raw water to pass but allows hardly any adsorbent to pass through. The material for such a mesh member is not limited specifically, and metallic material and resin material may be used. Also, it is preferred to use a mesh member having openings smaller than the minimum particle size of the adsorbent. In addition, when a molded adsorbent is used, it is not required to use a mesh member for the water inlet.

It is an option to form one or more raw water entry ports. Also, the opening shape of a raw water entry port is preferred to be larger so as not to impede the filtration speed.

The shape of an air outlet is not limited specifically, and it may be circular, elliptical, or polygonal. Alternatively, it may be irregular.

The shape of an air outlet may be selected properly. For example, the diameter may be set no smaller than 0.6 mm for the air outlet. When the diameter of the air outlet is set at 0.6 mm or greater, air is promptly vented to the outside. Here, the diameter of the air outlet indicates the diameter when it is a circle, the major axis when it is an ellipse, and the longest diagonal line when it is a polygon. When the shape is irregular, the diameter means the widest width. At least one air outlet is provided, but there may be multiple air outlets.

The shape of a container is not limited specifically, and a cylindrical shape with a substantially circular cross section, substantially elliptical cross section or substantially polygonal cross section may be listed. Among those, a cylindrical shape with a substantially circular cross section is preferred.

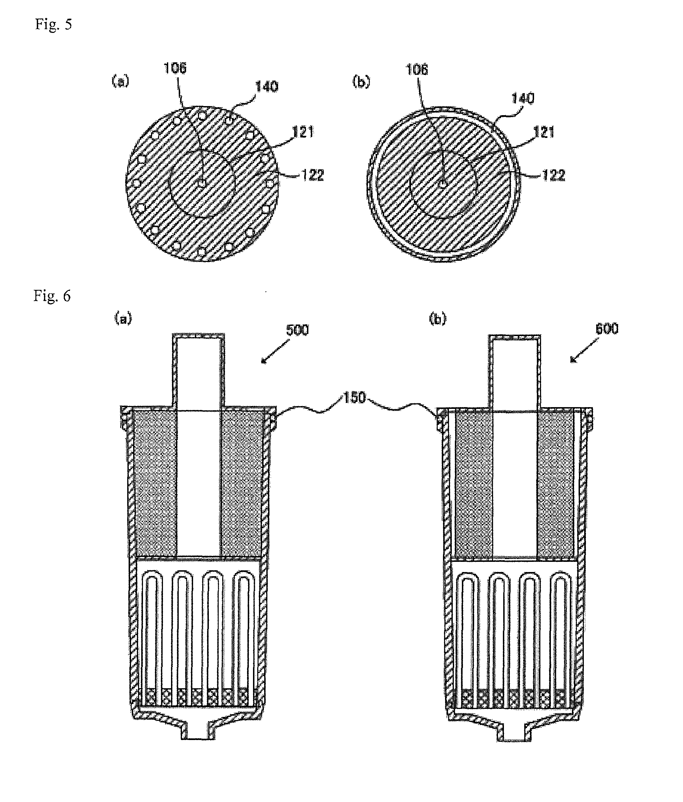

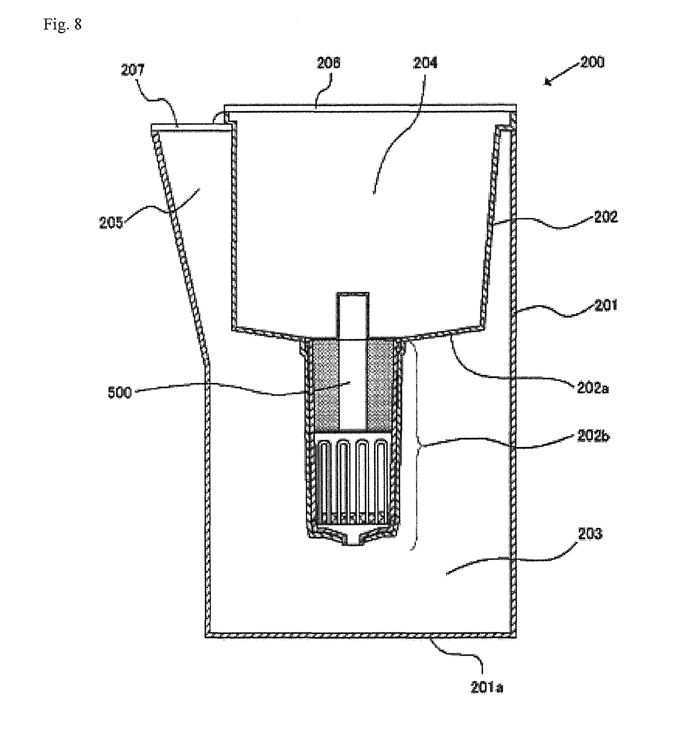

Moreover, as shown in FIG. 6(a), a groove to set elastic member **150** such as a gasket may be formed on the upper portion of casing **102b.** Accordingly, when a water purification cartridge is positioned in a cartridge accommodation section of a water purifier, a seal structure is obtained using elastic member **150** for close fitting. When such a seal structure is employed, a cartridge is closely fitted in cartridge accommodation section **202b** of inner container **202** as shown in FIG. 8.

FIG. 8 is a view showing a structural example of a water purifier in which water purification cartridge **500** shown in FIG. 6(a) is installed.

Water purifier **200** shown in FIG. 8 is a so-called pot-type water purifier. Water purifier **200** is formed mainly with raw water reservoir **204** in which raw water such as tap water is supplied and stored, water purification cartridge **500** installed at the bottom of raw water reservoir **204,** and purified water reservoir **203** positioned below raw water reservoir **204** and water purification cartridge **500.** Raw water stored in raw water reservoir **204** flows down through water purification cartridge **500** by virtue of gravity and its own weight and is purified. Then, purified water flows down to purified water reservoir **203.**

Water purifier **200** is formed with cylindrical outer container **201** having an open upper-end and a bottom, and cylindrical inner container **202** having an open upper-end and a bottom which is inserted through the upper-end opening of outer container **201** and is arranged inside outer container **201.** Inner container **202** is set to be positioned at approximately half the depth of outer container **201** or higher, and forms aforementioned raw water reservoir **204** in inner container **202** by being closely fitted to the upper-half portion of outer container **201** except for predetermined space **205.** In addition, purified water reservoir **203** is formed between bottom wall **202a** of inner container **202** and bottom wall **201a** of outer container **201.** Space **205** is formed to extend upward from purified water reservoir **203** so as to function as a spout when purified water is poured.

Upper cover **206** is fitted in the upper-end opening of inner container **202.** For example, in the center of upper cover **206,** an opening for supplying water is formed and an openable flap is provided to cover the water supply opening from above.

In addition, an opening formed at the upper end of space **205** works as a spout, and a spout cover **207** is provided over the spout.

On bottom wall **202a** of the inner container, accommodation section **202b** to accommodate a water purification cartridge is formed, and bottom wall **202a** of the inner container is set with a gentle downward slope toward accommodation section **202b.** Accommodation section **202b** for a water purification cartridge is recessed from bottom wall **202a** of the inner container toward the purified water reservoir. Water purification cartridge **500** is inserted from above to be fitted in accommodation section **202b.** In the bottom center of accommodation section **202b,** an opening is formed. Through accommodation section **202b** and the bottom opening, namely, through water purification cartridge **500** installed in accommodation section **202b,** raw water reservoir **204** is connected to purified water reservoir **203** positioned below.

### (Second Example)

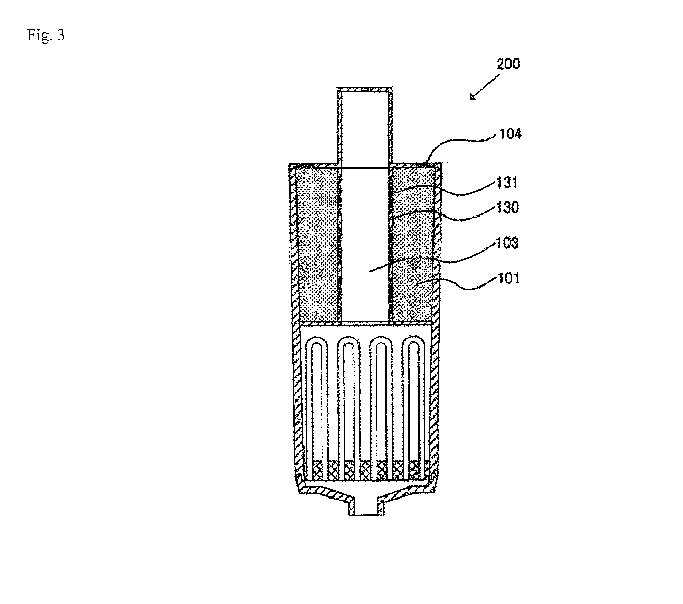

As shown in FIG. 3, water collector section **103** may be structured to have water collector structural member **130** with flow exit port **131** formed on the inner side surface of adsorber section **101.** Flow exit port **131** is formed to flow the water filtered by adsorber section **101** into water collector section **103.** Flow exit port **131** is preferred to be shaped so as not to allow the adsorbent to pass through. Flow exit port **131** is formed with a mesh member, for example. It is an option to form multiple flow exit ports **131** on the side surface of water collector section **103.**

If a molded body such as molded activated carbon or the like is used as the adsorbent, the above structure is not necessary. However, if a granular adsorbent or the like is used, such an adsorbent is kept in the adsorber section by using water collector structural member **130** such as above.

### (Third Embodiment)

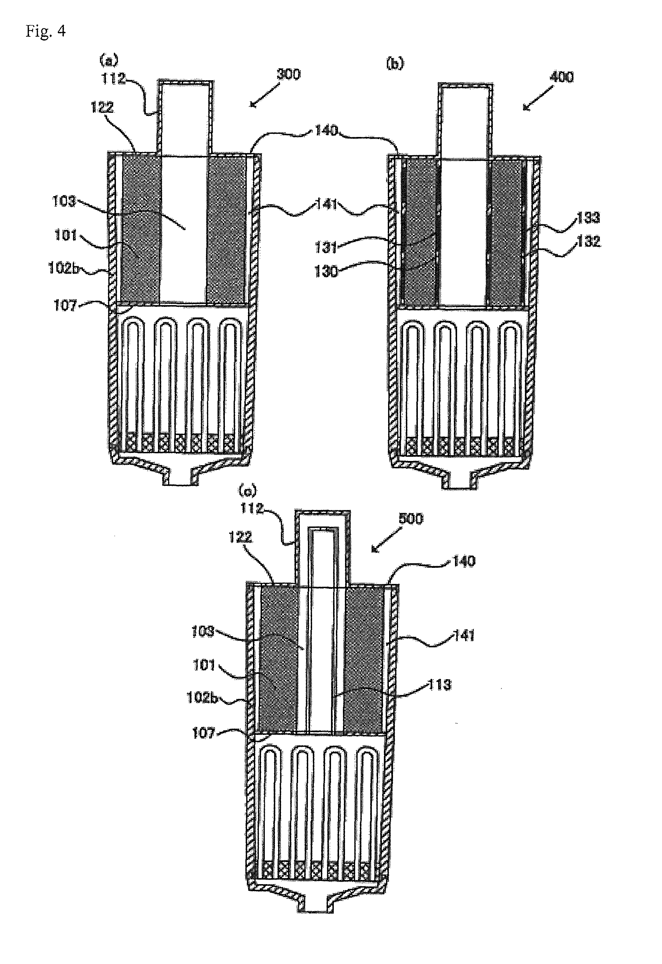

FIG. 4 shows examples of a water purification cartridge formed between a side surface of the adsorber section and a side wall of the container and having a raw water entry passage to allow raw water in the raw water reservoir to enter the container.

FIG. 4(a) is a view showing a structural example of the water purification cartridge according to the present embodiment, in which adsorber section **101** is formed using a molded body as the adsorbent. In FIG. 4(a), raw water entry passage **141** is formed between a side surface of adsorber section **101** and a side wall of casing **102b.** The upper end of raw water entry passage **141** is open at lower level **122** of upper cover **102a,** and raw water in the raw water reservoir flows from opening **140** into the container. Raw water entry passage **141** is formed between adsorber section **101** and casing **102b** extending to reach divider wall **107.** Here, opening **140** may also be viewed as a structure corresponding to the aforementioned raw water entry port. Namely, the raw water entry passage may be connected to the raw water entry port and may be positioned between a side surface of the adsorber section and a side wall of the container.

Raw water that has entered raw water entry passage **141** enters adsorber section **101** from a side surface of adsorber section **101,** is filtered, and flows out to water collector section **103.**

By employing the structure of the present embodiment, adsorber section **101** is more effectively used for filtration. Namely, when a raw water entry passage is positioned on a side surface of the adsorber section, the lower side portion of the adsorber section also contributes effectively to filtration processing, allowing the entire adsorber section to be used for filtration. Accordingly, processing capability is further enhanced.

In addition, as shown in FIG. 4(b), when a granular adsorbent is used, adsorber section **101** is structured with water collector structural member **130** and adsorber side-surface structural member **132.** Adsorber side-surface structural member **132** has flow entry port **133,** through which raw water in raw water entry passage **141** is allowed to enter adsorber section **101.**

Raw water entry passage **141** is preferred to be positioned between a side surface of adsorber section **101** and a side wall of the container and be formed all the way to the lower portion of the adsorber section, preferably to the lower end. Namely, raw water entry passage **141** is preferred to be formed along a side surface of the adsorber section.

Although not shown in the accompanying drawings, it is also an option to form raw water entry port **104** to allow raw water from the raw water reservoir to enter adsorber section **103** even when raw water entry passage **141** is formed.

Furthermore, as shown in FIG. 4(c), by arranging an air ventilation pipe in water collector section **103,** the water filtered in adsorber section **101** flows through water collector section **103** formed between adsorber section **101** and the air ventilation pipe, whereas the air generated in hollow-fiber membrane section **108** passes through the air ventilation pipe to be efficiently vented through the air outlet. Thus, the water permeability of the water purification cartridge is enhanced. In water purification cartridge **500** shown in FIG. 4(c), air ventilation pipe **113** is formed to pass vertically through water collector section **103.** In addition, air ventilation pipe **113** is formed to reach the air collector section formed as a protruding portion. An opening to vent air to the air collector section (also referred to as an air ventilation hole) is provided in the upper portion of air ventilation pipe **113.** The air passing through air ventilation pipe **113** and water collector section **103** and being collected in the air collector section is vented to the outside from the air outlet provided on top of the air collector section. Such an air ventilation hole is preferred to be formed higher than the upper end of adsorber section **101.**

FIG. 5 shows examples of shape and positions of upper end opening **140** of raw water entry passage **141.** As shown in FIG. 5(b), it is an option to arrange multiple raw entry passages **141** along the side wall of the container. In addition, raw water entry passage **141** is preferred to be arranged along the side wall of the container in the entire peripheral direction, namely, along the side surface of the adsorber section.

When a molded body is used as an adsorber section, raw water entry passage **141** may be formed by adjusting the distance between a side wall of the container and the adsorber section. Alternatively, a raw water entry passage may be formed in the absorber section by cutting a desired formation during the molding process or after molding the absorber section. By using a molded adsorbent, a compact water purification cartridge with a simplified structure is also obtained according to the present embodiment.

In raw water entry passage **141,** the horizontal distance from a side surface of adsorber section **101** to a side wall of the container is preferred to be 0.5∼20 mm, more preferably 1∼10 mm, even more preferably 2∼6 mm.

### DESCRIPTION OF NUMERICAL REFERENCES

- 101: adsorber section
- 102: container
- 102a: upper cover
- 102b: casing
- 102c: lower cover
- 103: water collector section
- 104: raw water entry port
- 104': raw water entry port (mesh member)
- 105: air collector section
- 106: air outlet
- 107: divider wall
- 108: hollow-fiber membrane section
- 109: hollow-fiber membrane
- 110: potting resin
- 111: purified water exit port
- 112: protruding portion
- 113: air ventilation pipe
- 121: upper level of protruding portion
- 122: lower level of protruding portion
- 130: water collector structural member
- 131: flow exit port
- 132: adsorber side-surface structural member
- 133: flow entry port
- 140: upper-end opening of raw water entry passage
- 141: raw water entry passage
- 150: elastic body
- 200: water purifier
- 201: outer container
- 202: inner container
- 203: purified water reservoir
- 204: raw water reservoir
- 205: space
- 206: upper cover
- 207: spout cover

## Claims

1. A water purification cartridge positioned between a raw water reservoir and a purified water reservoir of a water purifier and having a container to accommodate an adsorbent and a hollow-fiber membrane for filtering raw water, comprising:
an adsorber section in which the adsorbent is positioned and which has a water collector section through which the water filtered by the adsorbent flows;
a hollow-fiber membrane section in which the hollow-fiber membrane is positioned and which is located on the downstream side of the adsorber section and the water collector section; and
an air outlet positioned on the upper side of the container and connected to the space in the water collector section.

2. The water purification cartridge according to Claim 1, wherein the container has a protruding portion which is connected to the water collector section and which forms an air collector portion, and the air outlet is provided on the upper portion of the protruding portion.

3. The water purification cartridge according to Claim 1 or 2, wherein the raw water flows from the adsorber section toward the water collector section and then flows from the lower end of the water collector section into the hollow-fiber membrane section.

4. The water purification cartridge according to any one of Claims 1∼3, wherein the air generated in the hollow-fiber membrane section passes through the water collector section and is vented to the outside through the air outlet.

5. The water purification cartridge according to any one of Claims 1∼4, wherein the water collector section is formed vertically to pass through the adsorber section.

6. The water purification cartridge according to any one of Claims 1-5, wherein the adsorber section is formed using a molded adsorbent.

7. The water purification cartridge according to any one of Claims 1∼5, wherein the adsorber section is formed using an adsorbent which is granular-activated carbon with a particle size of 0.07∼2 mm.

8. The water purification cartridge according to Claim 6 or 7, wherein the upper-end portion of the adsorber section is formed to be in contact with the upper wall of the container.

9. The water purification cartridge according to any one of Claims 1∼8, further comprising a divider wall which divides the adsorber section and the hollow-fiber membrane section and has an opening to connect the water collector section and the hollow-fiber membrane section.

10. The water purification cartridge according to any one of Claims 1-9, wherein the container has a raw water entry port on the upper portion of the adsorber section so as to allow the raw water from the raw water reservoir to enter the adsorber section.

11. The water purification cartridge according to any one of Claims 1∼10, further comprising a raw water entry passage which is formed between a side surface of the adsorber section and a side wall of the container and which is for allowing the raw water from the raw water reservoir to enter the container.

12. The water purification cartridge according to Claim 11, wherein the raw water entry passage is formed along a side surface of the adsorber section.

13. The water purification cartridge according to Claim 11 or 12, wherein the raw water entry passage is formed to cover the side surface of the adsorber section.

14. The water purification cartridge according to any one of Claims 1∼13, further comprising a purified water exit port positioned on the lower side of the hollow-fiber membrane section to drain the obtained purified water into the purified water reservoir.

15. The water purification cartridge according to any one of Claims 1∼14, wherein the shape of the adsorber section is substantially cylindrical.

16. The water purification cartridge according to any one of Claims 1∼15, wherein the hollow-fiber membrane is fixed in the container by using potting resin, and the end portion of the hollow-fiber membrane is open on the surface opposite the surface where the potting resin is positioned.

17. The water purification cartridge according to any one of Claims 1∼16, wherein when the sum of the cross-sectional area of the plane perpendicular to the gravity direction in the adsorber section and the cross-sectional area of the plane perpendicular to the gravity direction in the water collector section is set as "A," whereas the cross-sectional area of the plane perpendicular to the gravity direction in the water collector section is set as "B," the value obtained by "B/A" is set at 0.001∼1.

18. The water purification cartridge according to any one of Claims 1∼17, wherein the membrane area of the hollow-fiber membrane is set at 0.1∼1 m².

19. The water purification cartridge according to any one of Claims 1∼18, further comprising an air ventilation pipe inside the water collector section.

20. The water purification cartridge according to any one of Claims 1∼19, wherein the shape of the water collector section is substantially cylindrical.

21. A water purifier, comprising the water purification cartridge according to any one of Claims 1∼20.
